# EUROPEAN PATENT SPECIFICATION

(11) **EP 3 523 216 B1**
(45) Date of publication and mention of the grant of the patent: **16.12.2020**
(21) Application number: 17791181.5
(22) Date of filing: 06.10.2017
(51) Int. Cl.: B65D 85/52

(54) **CONTAINER AND METHOD OF GROWING PLANTS**
BEHÄLTER UND VERFAHREN ZUM ZÜCHTEN VON PFLANZEN
RÉCIPIENT ET PROCÉDÉ DE CULTURE DE PLANTES

(30) Priority: 10.10.2016 NL 2017597
(43) Date of publication of application: 14.08.2019
(73) Proprietor: Rijk Zwaan Zaadteelt en Zaadhandel B.V., 2678 KX De Lier (NL)
(72) Inventor: KONG, Mw. Kalin, 2678 KX De Lier (NL)
(74) Representative: Jacobs, Bart
(86) International application number: PCT/NL2017/050657
(87) International publication number: WO 2018/070865

(56) References cited:
- EP-A1- 2 719 272
- WO-A1-2008/116954
- WO-A1-2016/042126
- US-A- 4 979 332
- US-A- 5 375 372
- US-A1- 2003 024 163

## Description

The present invention relates to a container in which one or more plants can be held. The invention relates in particular to a container in which plants and/or seeds are able to grow. The invention also relates to a method for growing plants.

EP 2719272 A1 discloses a container 1 for holding plants as illustrated in figure 1. Container 1 is closed by a semi-permeable membrane 2 that allows the exchange of growth-related substances such as oxygen and carbon dioxide, but blocks unwanted substances such as pathogens. A growth medium 3 is located inside container 1 in which one or more plants 4 can grow.

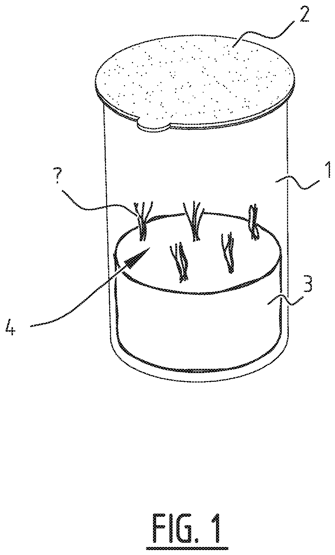

The known container allows the growth of plants and/or seeds in a substantially pathogen-free environment. More in particular, plants can grow within the packaging the plant is sold in. For example, a supermarket can offer the container as illustrated in figure 1. A customer may then purchase the container having the plants arranged therein at a suitable moment of plant development. Typically, the plants inside the container have already sufficiently grown before the container is offered to customers. However, the invention does not exclude customers purchasing the container at an early stage of plant development and allowing the plant to further grow after purchase. WO2008/116954A1 discloses a container for growing plants therein being provided with a cutting member to cut through the plants.

Although the aspect of plant growth in the final packaging is appealing for most customers, market acceptance is hindered due to the fact that the plant, which is held inside the container, such as lettuce, cannot be readily used when for instance preparing meals. Most costumers are familiar with a more convenient form of the plant. For example, pre-cut and pre-washed lettuce leafs can be purchased in a plastic bag. This allows the costumer to easily obtain and use the proper amount of leafs when preparing a meal.

An object of the present invention is to provide an improvement to holders of the type described above in which this inconvenience is mitigated.

According to the invention, this object has been achieved using a container according to claims 1 or 7 that comprises a container base having a growth medium in which one or more plants can be grown, and a container lid that is coupled to the container base. The container further comprises a cutting member for cutting through the one or more plants, wherein the cutting member can be actuated prior to or during an action of at least substantially breaking the coupling between the container lid and the container base. Accordingly, a user may cut through the one or more plants while the plants are still inside the container or as part of the action of opening the container for gaining access to the plants. In this manner, the situation can be avoided wherein a user must perform the cutting action after the plants have been removed from the container.

An action of cutting through the one or more plants using the cutting member is preferably mechanically coupled to the action of at least substantially breaking the coupling between the container lid and the container base such that performing one of these actions automatically causes the other of said actions to be performed in a substantially simultaneous manner. In this manner, cutting through the one or more plants and breaking the coupling is part of a single operational step or action.

The action of at least substantially breaking the coupling between the container lid and the container base may comprise separating the container base and the container lid. Alternatively, the container lid and container base may remain coupled to each other, albeit in a limited region thereof such as a small part of an edge.

By performing the action of at least substantially breaking the coupling between the container lid and the container base the user gains access to the desired plant parts that are held inside the container. Typically, the desired plant parts, such as leafs, are attached to a remainder of the plant, for instance the stem and/or roots of the plant. According to the invention, the desired plant parts are separated or can be separated from the remainder of the plant at a time that the user wishes to obtain them from the container.

The cutting member may be configured for separating leafs from a remainder of the one or more plants. The dimensions of the cutting member and/or the material used for the cutting member can be optimized with respect to the nature of the desired plant parts to be separated. For instance, relatively thick leafs may be require a relatively strong and sharp cutting member when trying to separate the leafs from the stem of the plant.

The container of the type described above is particularly well suited for vegetables or herbs. In particularly, the container is suited for leafy vegetables such as lettuce, endive, rocket, lamb lettuce, corn salad, chard, leaf beet, spinach, radish. The vegetables can also be sprout vegetables, such as cress, beet sprouts, alfalfa, broccoli sprouts, bean sprouts, fennel sprouts, cabbage sprouts, garlic sprouts, leek sprouts, pea sprouts, chickpea sprouts, radish sprouts. The herbs are for example selected from chives, parsley, basil, dill, coriander, cilantro, mint, oregano, rosemary, thyme, marjoram, lemon balm, tarragon, sage.

The container according to the present invention reduces the time required for a user to obtain the plant or plant parts from the closed container. More in particular, no additional tools such as scissors or knives are required. For example, the user may perform the action of breaking the coupling between the container base and container lid as a result of which leafs of a lettuce plant are separated from the roots and/or remainder of the lettuce plant. In this case, the leafs can be directly used. Depending on the geometry of the container lid, the lid may be used as a bowl or secondary container for holding the cut plant parts.

The cutting member may comprise a cutting wire having a first end thereof fixedly connected to the container lid or the container base, wherein the cutting wire is arranged around the one or more plants. For example, a loop may be formed by the cutting wire around the one or more plants. The action of cutting through the one or more plants may comprise decreasing the size of the loop. This action may be coupled to the action of breaking the coupling between the container base and the container lid.

The cutting wire may comprise a second end that is configured to be grasped by the user for decreasing a size of the loop to thereby cut through the one or more plants. The second end may be fed through a supporting element, such as a hook or loop, that is fixedly attached to or formed in the container base or container lid. In this case, the loop is formed between the first end and the supporting element.

The supporting element may comprise an opening formed in the container base or container lid through which the second end of the cutting wire passes. Alternatively, the supporting element may comprise a loop element that is fixedly attached to the container base or container lid and through which the second end of the cutting wire passes.

The pulling action of the user may also initiate the action of breaking the coupling between the container base and the container lid. This may for instance be achieved if the cutting wire couples the container base and the container lid. In this case, the second end is preferably clear from the container base or container lid such that it can easily be grasped.

Alternatively, the container may comprise a sealing that couples the container base and the container lid, wherein the sealing is configured to break when a user pulls the second end. For example, the sealing may be fixedly attached to the cutting wire and arranged inside the loop formed by the cutting wire, wherein the cutting member is configured to cut through the sealing when pulling the second end thereof. Alternatively, the sealing can be fixedly attached to the cutting wire and arranged outside the loop formed by the cutting wire, wherein the cutting member is configured to tear the sealing open when pulling the second end thereof.

The container may additionally or alternatively comprise a grid of at least one cutting member, such as one or more cutting wires, which grid is arranged inside the container base or container lid, and wherein the one or more plants are allowed to grow or have grown through the grid. The grid may be configured to separate plant parts that have been cut, wherein the grid is sufficiently dense to prevent cut plant parts to pass therethrough. This can for instance be achieved if the grid is formed using a plurality of grid wires, wherein a distance between adjacent cutting wires in the grid is sufficiently small. The grid may be fixedly attached at its circumference to the container lid or to the container base.

The grid may be used in addition to the cutting wire that is arranged in a loop. Alternatively, the cutting wire arranged in a loop is omitted. For example, the cutting member may comprise the grid and the grid may be fixedly connected to the container lid, wherein the cutting member is arranged to cut said one or more plants when rotating the container lid relative to the container base.

To this end, the container lid and container base may comprise first and second coupling structures, respectively, wherein the coupling structures couple the container lid and container base, and wherein the coupling structures allow the container base and the container lid to be separated from each other by rotating one of the container lid and container base relative to the other. For example, the first and second coupling structures comprise co-acting screw-threads or wherein the first and second coupling structures are arranged to form a bayonet type closure.

The container lid and/or the container base may comprise at least one of the materials from the group consisting of a plastic, paper, metal, wood, compostable material, degradable material and bio-degradable material. Generally, the container base has a tray or cup shape, whereas the container lid typically has a shell shape.

The growth medium may comprise at least one of the ingredients from the group consisting of water, minerals (major salts as well as minor salts), sugars, trace elements, vitamins and amino acids.

The container base may comprise a water reservoir for holding water. This reservoir may be spaced apart from the growth medium or the water may be absorbed by the growth medium. In the formed case, the container may preferably further comprise transport means for transporting water from the reservoir to the growth medium. These transport means may be based on capillary action for transporting the water. An example of such means comprise a wick.

At least a part of the container lid and/or container base may be formed by a semi-permeable membrane or filter for blocking pathogens and for allowing passage of water vapour, carbon dioxide and oxygen.

The present invention further provides a method of growing plants according to claim 13, comprising providing the container as defined above having one or more plants, one or more seeds, and/or one or more seedlings at least partially arranged in or on the growth medium, allowing the one or more plants to mature and/or allowing the one or more seeds and/or the one or more seedlings to grow into one or more plants, and cutting through the one or more plants using the cutting member prior to or during an action of at least substantially breaking the coupling between the container lid and the container base.

The method may further comprise substantially simultaneously performing the actions of at least substantially breaking the coupling between the container base and container lid and said cutting through the one or more plants.

Next, the invention will be discussed in more detail by referring to the appended drawings, wherein:
Figure 1 illustrates a known holder for allowing plants to grow inside the holder;
Figure 2A-2B illustrates an embodiment of the container of the present invention;
Figures 3A-3C illustrate different options for coupling the container base and container lid;
Figures 4A and 4B illustrate a further embodiment of the container of the present invention.

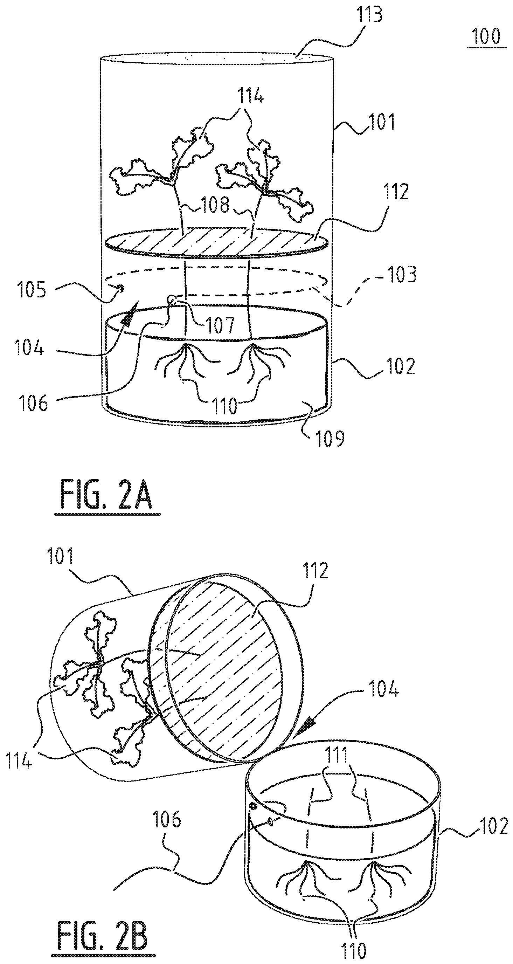

Figure 2A illustrates an embodiment of a container 100 according to the present invention. Container 100 comprises a container lid 101 that is coupled to a container base 102 using a cutting wire 103. In addition, a small region 104 may exist in which container base 102 and container lid 101 are attached to each other. It should be noted that at least one of container base 102 and container lid 101 may be transparent.

Cutting wire 103 is on one end 105 fixedly connected to container base 102 on an inside thereof. Another end 106 of cutting wire 103 is fed, from the inside, through an opening 107 in container base 102, to the outside. In this manner, cutting wire 103 is arranged in a loop around plants 108. Moreover, free end 106 can be grasped by a user for initiating the cutting action.

A suitable growth medium 109, is arranged inside container base 102. This growth medium comprises the nutrients and substances required for seed germination and/or plant growth.

As shown in figure 2A, roots 110 of two plants 108 reside in growth medium 109. The stems 111 of plants 108 extend from growth medium 109 and pass through openings of a grid 112, which is fixedly attached to container lid 101 above cutting wire 103. Grid 112 is optional. Moreover, it can also be fixedly attached to container base 102.

Alternatively, container base 102 may be provided with a separate water reservoir, wherein the growth medium is held inside container base 102 at a distance from the water reservoir, in a manner similar to the holder depicted in figure 1. Water transport can be achieved by means of roots 110 extending into the water or by means of water transport means, such as a wick, configured for transporting water, preferably using capillary action, from the water reservoir to growth medium 109.

At the top, a semi-permeable barrier 113, in the form of a membrane, filter or film, may be provided for isolating the plants 108 from the surrounding of container 100. Barrier 113 is configured to allow the exchange of water vapour, oxygen and carbon dioxide, but to block the entry of pathogens from the outside to the inside of container 100. In this manner, plants 108 can be grown without or with a limited need for introducing herbicides or pesticides in container 100.

When a user grasps end 106, cutting wire 103 will be pulled inwardly thereby breaking the coupling between container base 102 and container lid 101. At the same time, the loop around plants 108 will be tightened and at a given moment in time, cutting wire 103 will engage and cut through stems 111 or other parts of plants 108. Here, it is noted that the edges of opening 107 have a supporting function when pulling on end 106. The same holds for the connection of end 105 of cutting wire 103 to the inside of container base 102. This connection should remain intact during at least most of the cutting action.

Figure 2B illustrates a result of the user pulling cutting wire 103. As shown, container base 102 and container lid 101 are substantially decoupled. They only remain coupled near region 104. The skilled person readily understands that full decoupling can be arranged by appropriately choosing the dimensions of region 104 and/or the material properties at this position. For instance, this region can be made weak in such a manner that by sufficiently pulling cutting wire 103, container base 101 and container lid 102 get fully separated from each other. Alternatively, cutting wire 103 can be arranged differently, for instance by allowing the ends of cutting wires to pass each other.

Also shown are leafs 114 of plants 108, which are arranged inside container lid 101 in the space in between grid 112 and barrier 113.

Whether container 100 will be configured such that container lid 101 and container base 102 become fully separated after the cutting action depends on the preference of the user. Some users may prefer container base 102 and container lid 101 to remain coupled to keep a compact unit, whereas other users may prefer container lid 101 to get fully separated such that the user can continue by only handling and/or storing container lid 101 having the cut plant parts, such as leafs 114, arranged therein.

Cutting wire 103 is of a suitable material allowing it to cut through the plants. At the same time, cutting wire 103 should serve to couple container base 102 and container lid 101. As an exemplary packaging method, container base 102 may be first filled with a suitable growth medium 109 having the required substances, e.g. water and nutrients, added thereto. Thereafter, seeds may be deposited on or in growth medium 109 or seedlings or small plants are arranged in growth medium 109. At this stage, cutting wire 103 may already be arranged on an upper rim or edge of container base 102. As a next step, container lid 101 is attached to container base 102 via cutting wire 103. To this end, suitable techniques may be used such as gluing, clicking, screwing or sealing. When using grid 112 in combination with the abovementioned seedlings or small plants, it is preferred that the openings in grid 112 are such that the desired plant parts, such as leafs 114, are able to pass through these openings.

In figure 2A, cutting wire 103 couples container base 102 and container lid 101 as a result of which the action of breaking the coupling between base 102 and lid 101 and the action of cutting through plants 8 are mechanically coupled. Alternatively, cutting wire 103 is arranged on an inside of container base 102 or container lid 101 and separate coupling means are used for coupling base 102 and lid 101. In such embodiment, the action of breaking the coupling and the action of cutting through the plants are not mechanically coupled. It would however still be preferable if cutting wire 103, or another cutting member, can be engaged by a user for performing the cutting action from outside the container. As illustrated in figure 2A, this can be achieved by feeding one end of cutting wire 103 to the outside.

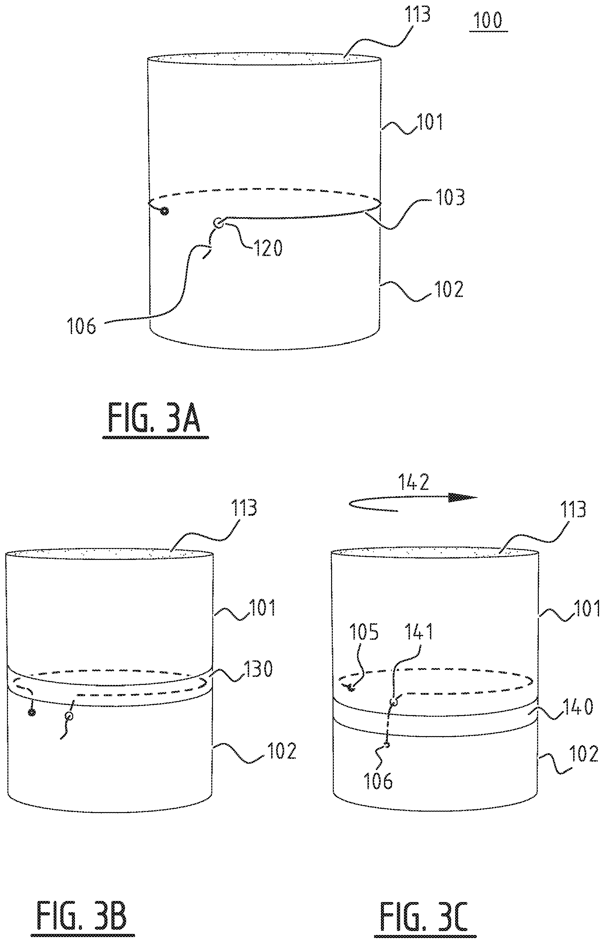

Figures 3A-3C show variations of the coupling between container base 102 and container lid 101. In these figures, the other elements of figure 2A, such as the plants, growth medium and grid, have been left out for clarity.

In figure 3A, cutting wire 103 is not arranged through an opening of container base 102, but is fed through a loop element 120 that is arranged on the outside of container base 102. When a user pulls end 106, the loop formed by cutting wire 103 will get smaller. Loop element 120 has a supporting function similar to the edges of opening 107 in figure 2A.

In figure 3B, a separate sealing element 130 is used for connecting container base 102 and container lid 101. Here, cutting wire 103 is fixedly attached to sealing element 130, whereby ends 104, 105 cutting wire 130 are connected to container base 102 in a manner identical to figure 2A.

Sealing element 130 can be made of a different material than cutting wire 103. The main purpose of sealing element 130 is to connect container base 102 and container lid 101. However, the strength of sealing element 130 should be such that sealing element 130 tears when pulling cutting wire 103, thereby breaking the coupling between container base 102 and container lid 101. Alternatively, cutting wire 103 can be arranged around sealing element 130 such that it cuts through sealing element 130 when a user pulls end 106.

Figure 3C shows a container lid 101 and container base 102 that are coupled using complementary coupling means 140 in the form of screw threads. In this embodiment, container base 102 can container lid 101 can be coupled or decoupled by moving, e.g. rotating, them relative to each other. In this embodiment, cutting wire 103 has one end 105 thereof fixedly attached to container lid 101, whereas the other end 106 is fixedly attached to the container base 102. A loop element 141 may be used that is fixedly attached to container lid 101.

When a user rotates container lid 101 relative to container base 102 in the direction indicated by arrow 142, the distance between loop element 141 and the point of fixation of end 106 increases. As a result, the loop formed by cutting wire 103 will get smaller ultimately resulting in the cutting of the plants.

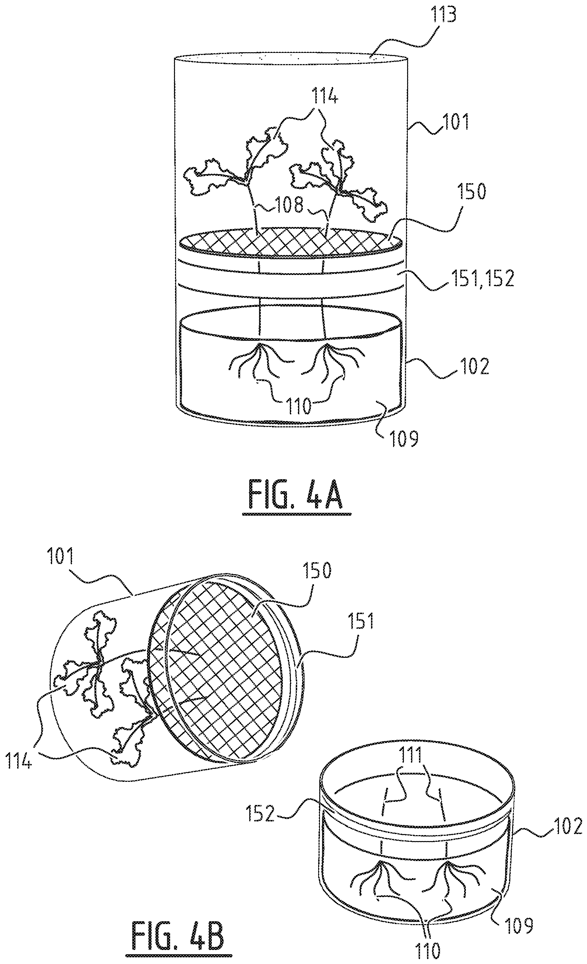

Figures 4A and 4B show an embodiment similar to the embodiment in figure 3C but wherein cutting wire 103 has been replaced by grid 150 of cutting wires that is fixedly attached to container lid 101. Cutting grid 150 serves to cut through plants 108 as will be elucidated later and will keep the cut plant parts separate from a remainder of the plants after cutting as indicated in figure 4B.

Similar to the figure 3C embodiment, container base 102 and container lid 101 are provided with complementary screw threads 151, 152.

When a user rotates container lid 101 relative to container base 102, cutting grid 150 will perform a rotary motion relative to plants 108. Consequently, cutting grid 150 will cut through plants 108 thereby separating the cut plant parts, such as leafs 114, in container lid 101 in the region in between cutting grid 150 and barrier 113. In a manner similar for all embodiments, a user may gain access to the cut plant parts by breaking barrier 113. In some embodiments, a grid is not used and the cut plant parts in container lid 101 are directly accessible. A particular advantage of the figure 4A embodiment is that the container can be easily assembled in case seeds are used as starting material. The seeds are simply placed on or in growth medium 109 inside container base 102 after which the container is closed by arranging container lid 101 on container base 102. In case the starting material comprises small plants or seedlings, it may be required to properly choose the distance between cutting grid 150 and growth medium 109 to avoid a cutting action when coupling container base 102 and container lid 101.

In the embodiments described above, cutting members and sealing elements were used for coupling the container lid and the container base. The skilled person will understand that the coupling between container lid and container base using these elements must be properly sealed to prevent pathogens from entering the container.

Although the invention has been described using embodiments thereof, the skilled person would readily understand that various modification are possible without deviating from the scope of the invention that is described by the appended claims.

## Claims

1. A container (100), comprising:
a container base (102), the container base comprising a growth medium (109) in which one or more plants (108) can be grown;
a container lid (101) that is coupled to the container base;
a cutting member (103) for cutting through the one or more plants, wherein the cutting member can be actuated prior to or during an action of at least substantially breaking the coupling between the container lid and the container base,
**characterized in that**
the cutting member comprises a cutting wire having a first end thereof fixedly connected to the container lid or the container base, said cutting member being arranged in a loop substantially surrounding said one or more plants.

2. The container of claim 1, wherein the cutting member comprises a second end (106) that is configured to be grasped by the user for decreasing a size of the loop to thereby cut through said one or more plants, wherein, preferably, the second end is fed through a supporting element that is fixedly attached to of formed in the container base or container lid and the loop is formed between the first end and the supporting element, said supporting element preferably comprising an opening (107) formed in the container base or container lid through which the second end of the cutting member passes, or comprising a loop element (120) that is fixedly attached to the container base or container lid and through which the second end of the cutting member passes.

3. The container of claim 2, wherein the cutting member couples the container base and the container lid, and wherein, preferably, the second end is clear from the container base and the container lid such that a user can grasp the second end.

4. The container of any of the claims 2-3, wherein the container comprises a sealing (130) that couples the container base and the container lid, wherein the sealing is configured to break when the user pulls the second end;
wherein, preferably:
the sealing is fixedly attached to the cutting member and arranged inside the loop formed by the cutting member and said cutting member being configured to cut through the sealing when pulling the second end thereof; or
the sealing is fixedly attached to the cutting member and arranged outside the loop formed by the cutting member, said cutting member being configured to tear the sealing open when pulling the second end thereof.

5. The container of claim 1, wherein the container lid and container base comprise first and second coupling structures, respectively, wherein the coupling structures couple the container lid and container base, and wherein the coupling structures allow the container base and the container lid to be separated from each other by rotating one of the container lid and container base relative to the other, wherein the first and second coupling structures preferably comprise co-acting screw-threads or wherein the first and second coupling structures are arranged to form a bayonet type closure.

6. The container of claim 5, wherein the cutting member further comprises a second end, wherein the second end is fixedly attached to the container lid when the first end is fixedly attached to the container base, or wherein the second end is fixedly attached to the container base when the first end is fixedly attached to the container lid.

7. A container (100), comprising:
a container base (102), the container base comprising a growth medium (109) in which one or more plants (108) can be grown;
a container lid (101) that is coupled to the container base,
**characterized in that**
the container further comprises a grid (150) of at least one cutting member, wherein the grid can be actuated prior to or during an action of at least substantially breaking the coupling between the container lid and the container base, which grid is arranged inside the container base or container lid, wherein the one or more plants are allowed to grow or have grown through the grid.

8. The container of claim 7, wherein the grid is configured to separate plant parts that have been cut, wherein the grid is sufficiently dense or the openings sufficiently small to prevent cut plant parts to pass therethrough;
wherein the grid is preferably fixedly attached at its circumference to the container lid or to the container base, and wherein more preferably the cutting member comprises said grid and wherein the grid is fixedly connected to the container lid and wherein the cutting member is arranged to cut said one or more plants when rotating the container lid relative to the container base, and wherein even more preferably the container lid and container base comprise first and second coupling structures, respectively, wherein the coupling structures couple the container lid and container base, and wherein the coupling structures allow the container base and the container lid to be separated from each other by rotating one of the container lid and container base relative to the other, wherein the first and second coupling structures preferably comprise co-acting screw-threads or wherein the first and second coupling structures are arranged to form a bayonet type closure.

9. The container of any of the previous claims, wherein the container lid and/or the container base comprises at least one of the materials from the group consisting of a plastic, paper, metal, wood, compostable material, degradable material and bio-degradable material;
wherein the growth medium comprises at least one of the ingredients from the group consisting of water, minerals (major salts as well as minor salts), sugars, trace elements, vitamins and amino acids;
wherein the container base comprises a water reservoir for holding water or wherein water is absorbed in the growth medium, wherein the reservoir is spaced apart from the growth medium, the container preferably further comprising transport means for transporting water from the reservoir to the growth medium; and
wherein at least a part of the container lid and/or container base is formed by a semi-permeable filter or membrane for blocking pathogens and for allowing passage of water vapor, carbon dioxide and oxygen.

10. The container of any of the previous claims, wherein said action of at least substantially breaking the coupling between the container lid and the container base comprises separating the container base and the container lid.

11. The container of any of the previous claims, wherein the cutting member is configured for separating leafs from a remainder of the one or more plants.

12. The container of any of the previous claims, comprising the one or more plants arranged at least partially inside the growth medium.

13. A method of growing plants, comprising:
providing the container as defined in any of the previous claims having one or more plants, one or more seeds, and/or one or more seedlings at least partially arranged in or on the growth medium;
allowing the one or more plants to mature and/or allowing the one or more seeds and/or the one or more seedlings to grow into one or more plants;
cutting through the one or more plants using the cutting member prior to or during an action of at least substantially breaking the coupling between the container lid and the container base;
wherein the actions of at least substantially breaking the coupling between the container base and container lid and said cutting through the one or more plants are performed substantially simultaneously;
wherein an action of cutting through the one or more plants using the cutting member is mechanically coupled to the action of at least substantially breaking the coupling between the container lid and the container base such that performing one of these actions automatically causes the other of said actions to be performed in a substantially simultaneous manner.

## Patentansprüche

1. Behälter (100), der aufweist:
einen Behältersockel (102), wobei der Behälter ein Zuchtmedium (109) aufweist, in dem eine oder mehrere Pflanzen (108) gezüchtet werden können;
einen Behälterdeckel (101), der mit dem Behältersockel gekoppelt ist;
ein Schneidelement (103) zum Schneiden durch die eine oder mehreren Pflanzen, wobei das Schneidelement vor oder während einer Tätigkeit, bei der im Wesentlichen die Kopplung zwischen dem Behälterdeckel und dem Behältersockel unterbrochen wird, betätigt werden kann,
**dadurch gekennzeichnet, dass**
das Schneidelement einen Schneiddraht aufweist, dessen erstes Ende fest mit dem Behälterdeckel oder dem Behältersockel verbunden ist, wobei das Schneidelement in einer Schleife angeordnet ist, die im Wesentlichen die eine oder mehreren Pflanzen umgibt.

2. Behälter nach Anspruch 1, wobei das Schneidelement ein zweites Ende (106) aufweist, das konfiguriert ist, um von dem Benutzer gegriffen zu werden, um eine Größe der Schleife zu verringern, um dadurch die eine oder mehreren Pflanzen zu durchschneiden, wobei das zweite Ende bevorzugt durch ein Haltelement zugeführt wird, das fest an dem Behältersockel oder Behälterdeckel befestigt oder darin ausgebildet ist, und wobei die Schleife zwischen dem ersten Ende und dem Haltelement ausgebildet ist, wobei das Haltelement bevorzugt eine Öffnung (107) aufweist, die in dem Behältersockel oder Behälterdeckel ausgebildet ist, durch den das zweite Ende des Schneidelements geht, oder ein Schleifenelement (120) aufweist, welches fest an dem Behältersockel oder Behälterdeckel befestigt ist und durch welches das zweite Ende des Schneidelements geht.

3. Behälter nach Anspruch 2, wobei das Schneidelement den Behältersockel und den Behälterdeckel koppelt, und wobei das zweie Ende bevorzugt frei von dem Behältersockel und dem Behälterdeckel ist, so dass ein Benutzer das zweite Ende greifen kann.

4. Behälter nach einem der Ansprüche 2 - 3, wobei der Behälter eine Dichtung (130) aufweist, die den Behältersockel und den Behälterdeckel koppelt, wobei die Dichtung konfiguriert ist, um zu brechen, wenn der Benutzer an dem zweiten Ende zieht;
wobei vorzugsweise:
die Dichtung fest an dem Schneidelement befestigt ist und im Inneren der von dem Schneidelement ausgebildeten Schleife angeordnet ist, und das Schneidelement konfiguriert ist, um durch die Dichtung zu schneiden, wenn an seinem zweiten Ende gezogen wird; oder
die Dichtung fest an dem Schneidelement befestigt ist und außerhalb der durch das Schneidelement ausgebildeten Schleife angeordnet ist, wobei das Schneidelement konfiguriert ist, um die Dichtung aufzureißen, wenn an seinem zweiten Ende gezogen wird.

5. Behälter nach Anspruch 1, wobei der Behälterdeckel und der Behältersockel jeweils erste und zweite Kopplungsstrukturen aufweisen, wobei die Kopplungsstrukturen den Behälterdeckel und den Behältersockel koppeln, und wobei die Kopplungsstrukturen zulassen, dass der Behältersockel und der Behälterdeckel voneinander getrennt werden, indem der Behälterdeckel oder der Behältersockel relativ zu dem anderen gedreht wird, wobei die ersten und zweiten Kopplungsstrukturen bevorzugt zusammenwirkende Schraubgewinde aufweisen oder wobei die ersten und zweiten Kopplungsstrukturen eingerichtet sind, um einen Bajonettverschluss zu bilden.

6. Behälter nach Anspruch 5, wobei das Schneidelement ferner ein zweites Ende aufweist, wobei das zweite Ende fest an dem Behälterdeckel befestigt ist, wenn das erste Ende fest an dem Behältersockel befestigt ist, oder wobei das zweite Ende fest an dem Behältersockel befestigt ist, wenn das erste Ende fest an dem Behälterdeckel befestigt ist.

7. Behälter (100), der aufweist:
einen Behältersockel (102), wobei der Behältersockel ein Zuchtmedium (109) aufweist, in dem eine oder mehrere Pflanzen (108) gezüchtet werden können;
einen Behälterdeckel (101), der mit dem Behältersockel gekoppelt ist;
**dadurch gekennzeichnet, dass**
der Behälter (150) ferner ein Gitter (150) aus wenigstens einem Schneidelement aufweist, wobei das Gitter vor oder während einer Tätigkeit, bei der im Wesentlichen die Kopplung zwischen dem Behälterdeckel und dem Behältersockel unterbrochen wird, betätigt werden kann, wobei das Gitter im Inneren des Behältersockels oder des Behälterdeckels angeordnet ist, wobei zugelassen wird, dass die eine oder mehreren Pflanzen durch das Gitter wachsen oder gewachsen sind.

8. Behälter nach Anspruch 7, wobei das Gitter konfiguriert ist, um Pflanzenteile, die geschnitten wurden, zu trennen, wobei das Gitter ausreichend dicht ist oder die Öffnungen ausreichend klein sind, um zu verhindern, dass geschnittene Pflanzen hindurchgehen;
wobei das Gitter bevorzugt an seinem Umfang fest an dem Behälterdeckel oder an dem Behältersockel befestigt ist, und wobei das Schneidelement bevorzugter das Gitter aufweist, und wobei das Gitter fest mit dem Behälterdeckel verbunden ist, und wobei das Schneidelement angeordnet ist, um eine oder mehrere Pflanzen zu schneiden, wenn der Behälterdeckel relativ zu dem Behältersockel gedreht wird, und wobei der Behälterdeckel und der Behältersockel sogar bevorzugter jeweils erste und zweite Kopplungsstrukturen aufweisen, wobei die Kopplungsstrukturen den Behälterdeckel und den Behältersockel koppeln, und wobei die Kopplungsstrukturen zulassen, dass der Behältersockel und der Behälterdeckel voneinander getrennt werden, indem der Behälterdeckel oder der Behältersockel relativ zu dem anderen gedreht wird, wobei die ersten und zweiten Kopplungsstrukturen bevorzugt zusammenwirkende Schraubgewinde aufweisen oder wobei die ersten und zweiten Kopplungsstrukturen eingerichtet sind, um einen Bajonettverschluss zu bilden.

9. Behälter nach einem der vorhergehenden Ansprüche, wobei der Behälterdeckel und/oder der Behältersockel wenigstens eines der Materialien aus der Gruppe aufweist/en, die aus Kunststoff, Papier, Metall, Holz, kompostierbarem Material, abbaubarem Material und biologisch abbaubarem Material besteht;
wobei das Zuchtmedium wenigstens eine der Zutaten aus der Gruppe aufweist, die aus Wasser, Mineralien (Hauptsalzen ebenso wie Nebensalzen), Zuckern, Spurenelementen Vitaminen und Aminosäuren besteht;
wobei der Behältersockel einen Wasservorratsbehälter zum Halten von Wasser aufweist, oder wobei Wasser in dem Zuchtmedium absorbiert wird, wobei der Vorratsbehälter von dem Zuchtmedium beabstandet ist, wobei der Behälter ferner bevorzugt Transporteinrichtungen zum Transportieren von Wasser von dem Vorratsbehälter zu dem Zuchtmedium aufweist; und wobei wenigstens ein Teil des Behälterdeckels und/oder des Behältersockels durch ein halbdurchlässiges Filter oder eine Membran zum Blockieren von Pathogenen und Zulassen des Durchgangs von Wasserdampf, Kohlendioxid und Sauerstoff ausgebildet ist.

10. Behälter nach einem der vorhergehenden Ansprüche, wobei die Tätigkeit, bei der im Wesentlichen die Kopplung zwischen dem Behälterdeckel und dem Behältersockel unterbrochen wird, das Trennen des Behältersockels und des Behälterdeckels aufweist.

11. Behälter nach einem der vorhergehenden Ansprüche, wobei das Schneidelement konfiguriert ist, um Blätter von einem Rest der einen oder mehreren Pflanzen zu trennen.

12. Behälter nach einem der vorhergehenden Ansprüche, der die eine oder mehreren Pflanzen aufweist, die wenigstens teilweise im Inneren des Zuchtmediums angeordnet sind.

13. Verfahren zur Zucht von Pflanzen, das aufweist:
Bereitstellen des Behälters, wie in jedem der vorhergehenden Ansprüche definiert, der ein oder mehrere Pflanzen, ein oder mehrere Samen und/oder ein oder mehrere Jungpflanzen, die wenigstens teilweise in oder auf dem Zuchtmedium angeordnet sind, aufweist;
Zulassen, dass die eine oder mehreren Pflanzen reifen und/oder Zulassen, dass der eine oder die mehreren Samen und/oder die eine oder mehreren Jungpflanzen zu einer oder mehreren Pflanzen wachsen;
Schneiden durch die eine oder mehreren Pflanzen unter Verwendung des Schneidelements vor oder während einer Tätigkeit, bei der im Wesentlichen die Kopplung zwischen dem Behälterdeckel und dem Behältersockel unterbrochen wird,
wobei die Tätigkeiten, in denen im Wesentlichen die Kopplung zwischen dem Behältersockel und dem Behälterdeckel unterbrochen wird, und des Schneidens durch die eine oder mehreren Pflanzen im Wesentlichen gleichzeitig durchgeführt werden;
wobei eine Tätigkeit, in der unter Verwendung des Schneidelements durch die eine oder mehreren Pflanzen geschnitten wird, mechanisch mit der Tätigkeit, in der die Kopplung zwischen dem Behälterdeckel und dem Behältersockel im Wesentlichen unterbrochen wird, gekoppelt wird, so dass die Durchführung einer dieser Tätigkeiten automatisch bewirkt, dass die andere der Tätigkeiten in einer im Wesentlichen gleichzeitigen Weise durchgeführt wird.

## Revendications

1. Conteneur (100), comprenant :
une base de conteneur (102), la base de conteneur comprenant un substrat de culture (109) dans lequel une ou plusieurs plantes (108) peuvent être cultivées ;
un couvercle de conteneur (101) qui est couplé à la base de conteneur ;
un élément coupant (103) destiné à couper la ou les plantes, dans lequel l'élément coupant peut être activé avant ou pendant une action consistant à rompre au moins sensiblement le couplage entre le couvercle de conteneur et la base de conteneur,
**caractérisé en ce que**
l'élément coupant comprend un fil coupant dont une première extrémité est reliée à demeure sur le couvercle de conteneur ou la base de conteneur, ledit élément coupant étant agencé suivant une boucle entourant sensiblement lesdites une ou plusieurs plantes.

2. Conteneur selon la revendication 1, dans lequel l'élément coupant comprend une seconde extrémité (106) qui est configurée de manière à être saisie par l'utilisateur afin de réduire une dimension de la boucle pour ainsi couper lesdites une ou plusieurs plantes, dans lequel, de préférence, la seconde extrémité est délivrée à travers un élément de support qui est fixé à demeure sur la base de conteneur ou le couvercle de conteneur ou formé sur celui-ci et la boucle est formée entre la première extrémité et l'élément de support, ledit élément de support comprenant, de préférence, une ouverture (107) formée sur la base de conteneur ou le couvercle de conteneur, à travers laquelle la seconde extrémité de l'élément coupant passe, ou comprenant un élément en boucle (120) qui est fixé à demeure sur la base de conteneur ou le couvercle de conteneur et à travers lequel passe la seconde extrémité de l'élément coupant.

3. Conteneur selon la revendication 2, dans lequel l'élément coupant couple la base de conteneur et le couvercle de conteneur, et dans lequel, de préférence, la seconde extrémité est libre par rapport à la base de conteneur et au couvercle de conteneur de telle sorte qu'un utilisateur peut saisir la seconde extrémité.

4. Conteneur selon l'une quelconque des revendications 2 ou 3, dans lequel le conteneur comprend un élément de scellement (130) qui couple la base de conteneur et le couvercle de conteneur, dans lequel l'élément de scellement est configuré de manière à rompre lorsque l'utilisateur tire sur la seconde extrémité ;
dans lequel, de préférence :
l'élément de scellement est fixé à demeure sur l'élément coupant et agencé à l'intérieur de la boucle formée par l'élément coupant et ledit élément coupant étant configuré de manière à couper l'élément de scellement lors d'une traction sur sa seconde extrémité ; ou
l'élément de scellement est fixé à demeure sur l'élément coupant et agencé à l'extérieur de la boucle formée par l'élément coupant, ledit élément coupant étant configuré de manière à déchirer l'élément de scellement à l'état ouvert lors d'une traction sur sa seconde extrémité.

5. Conteneur selon la revendication 1, dans lequel le couvercle de conteneur et la base de conteneur comprennent respectivement des première et seconde structures de couplage, dans lequel les structures de couplage couplent le couvercle de conteneur et la base de conteneur, et dans lequel les structures de couplage permettent la séparation de la base de conteneur et du couvercle de conteneur l'un de l'autre par rotation de l'un du couvercle de conteneur et de la base de conteneur par rapport à l'autre, dans lequel les première et seconde structures de couplage comprennent de préférence des filetages de vis coopérants ou dans lequel les première et seconde structures de couplage sont agencées afin de former un dispositif de fermeture du type à baïonnette.

6. Conteneur selon la revendication 5, dans lequel l'élément coupant comprend, en outre, une seconde extrémité, dans lequel la seconde extrémité est fixée à demeure sur le couvercle de conteneur lorsque la première extrémité est fixée à demeure sur la base de conteneur, ou dans lequel la seconde extrémité est fixée à demeure sur la base de conteneur lorsque la première extrémité est fixée à demeure sur le couvercle de conteneur.

7. Conteneur (100), comprenant :
une base de conteneur (102), la base de conteneur comprenant un substrat de culture (109) sur lequel une ou plusieurs plantes (108) peuvent être cultivées ;
un couvercle de conteneur (101) qui est couplé à la base de conteneur,
**caractérisé en ce que**
le conteneur comprend, en outre, une grille (150) d'au moins un élément coupant, dans lequel la grille peut être activée avant ou pendant une action consistant à rompre au moins sensiblement le couplage entre le couvercle de conteneur et la base de conteneur, laquelle la grille est agencée à l'intérieur de la base de conteneur ou du couvercle de conteneur, dans lequel les une ou plusieurs plantes sont amenées à croître ou ont crû à travers la grille.

8. Conteneur selon la revendication 7, dans lequel la grille est configurée de manière à séparer des parties de plante qui ont été coupées, dans lequel la grille est suffisamment dense ou les ouvertures suffisamment petites pour empêcher les parties de plante coupées de passer à travers ;
dans lequel la grille est, de préférence, fixée à demeure au niveau de sa circonférence sur le couvercle de conteneur ou sur la base de conteneur, et dans lequel, plus préférablement, l'élément coupant comprend ladite grille et dans lequel la grille est reliée à demeure au couvercle de conteneur et dans lequel l'élément coupant est agencé afin de couper lesdites une ou plusieurs plantes lors de la rotation du couvercle de conteneur par rapport à la base de conteneur, et dans lequel, encore plus préférablement, le couvercle de conteneur et la base de conteneur comprennent respectivement des première et seconde structures de couplage, dans lequel les structures de couplage couplent le couvercle de conteneur et la base de conteneur, et dans lequel les structures de couplage permettent la séparation de la base de conteneur et du couvercle de conteneur l'une de l'autre par rotation de l'un du couvercle de conteneur et de la base de conteneur par rapport à l'autre, dans lequel les première et seconde structures de couplage comprennent, de préférence, des filetages de vis coopérants ou dans lequel les première et seconde structures de couplage sont agencées afin de former un dispositif de fermeture du type à baïonnette.

9. Conteneur selon l'une quelconque des revendications précédentes, dans lequel le couvercle de conteneur et/ou la base de conteneur comprennent au moins l'un des matériaux du groupe constitué par une matière plastique, du papier, un métal, du bois, un matériau compostable, un matériau dégradable et un matériau biodégradable ;
dans lequel le substrat de culture comprend au moins l'un des ingrédients à partir du groupe constitué par de l'eau, des minéraux (sels principaux de même que sels secondaires), des sucres, des oligoéléments, des vitamines et des acides aminés ;
dans lequel la base de conteneur comprend un réservoir d'eau afin de contenir de l'eau ou dans lequel l'eau est absorbée dans le substrat de culture, dans lequel le réservoir est espacé par rapport au substrat de culture, le conteneur comprenant, en outre, de préférence, un moyen de transport afin de transporter l'eau du réservoir vers le substrat de culture ; et
dans lequel au moins une partie du couvercle de conteneur et/ou de la base de conteneur est formée par un filtre semi perméable ou une membrane destinée à bloquer des agents pathogènes et à permettre le passage de vapeur d'eau, de dioxyde de carbone et d'oxygène.

10. Conteneur selon l'une quelconque des revendications précédentes, dans lequel ladite action consistant à rompre au moins sensiblement le couplage entre le couvercle de conteneur et la base de conteneur comprend la séparation de la base de conteneur et du couvercle de conteneur.

11. Conteneur selon l'une quelconque des revendications précédentes, dans lequel l'élément coupant est configuré de manière à séparer des feuilles par rapport au reste de la ou des plantes.

12. Conteneur selon l'une quelconque des revendications précédentes, comprenant les une ou plusieurs plantes agencées au moins partiellement à l'intérieur du substrat de culture.

13. Procédé de culture de plantes, comprenant :
la préparation d'un conteneur selon l'une quelconque des revendications précédentes comportant une ou plusieurs plantes, une ou plusieurs graines, et/ou un ou plusieurs jeunes plants agencés au moins partiellement dans ou sur le substrat de culture ;
la maturation de la ou des plantes et/ou la croissance de la ou des graines et/ou du ou des jeunes plants en une ou plusieurs plantes ;
la coupe des une ou plusieurs plantes en utilisant l'élément coupant avant ou pendant une action consistant à rompre au moins sensiblement le couplage entre le couvercle de conteneur et la base de conteneur ;
dans lequel les actions consistant à rompre au moins sensiblement le couplage entre la base de conteneur et le couvercle de conteneur et ladite coupe d'une ou plusieurs plantes sont réalisées de manière sensiblement simultanée ;
dans lequel une action de coupe de la ou des plantes en utilisant l'élément coupant est couplée mécaniquement à l'action consistant à rompre au moins sensiblement le couplage entre le couvercle de conteneur et la base de conteneur de telle sorte que l'exécution automatique d'une de ces actions provoque l'exécution de l'autre desdites actions de manière sensiblement simultanée.
